# EUROPEAN PATENT APPLICATION

(11) **EP 2 999 025 A1**
(43) Date of publication of application: **23.03.2016**
(21) Application number: 13887106.6
(22) Date of filing: 26.09.2013
(51) Int. Cl.: H01M 2/10

(54) **SHELL ASSEMBLY FOR ELECTRONIC DEVICE BATTERY, PLASTIC AND METAL ASSEMBLY AND PLASTIC PART**

(30) Priority: 17.06.2013 CN 201320345921 U
(71) Applicant: ZTE Corporation, Shenzhen, Guangdong 518057 (CN)
(72) Inventor: MENG, Fanhu, Shenzhen Guangdong 518057 (CN)
(74) Representative: Schröer, Gernot H.
(86) International application number: PCT/CN2013/084338
(87) International publication number: WO 2014/201779

(57) **Abstract**

A battery shell assembly for an electronic device, a plastic and metal assembly and a plastic part are disclosed. The battery shell assembly for the electronic device includes a plastic part, a metal part and a thin film, wherein, the plastic part has a window and a first combination portion; the metal part includes a sheet portion covering the window and a second combination portion matching with the first combination portion, and an accommodation space used for accommodating a battery of the electronic device is formed after the plastic part is combined with the metal part; and the thin film adheres to and covers a juncture of the plastic part and the metal part exposed relative to the accommodation space.

## Description

### Technical Field

The present invention relates to an electronic device, and particularly, to a battery shell assembly for the electronic device, a plastic and metal assembly and a plastic part.

### Background of the Related Art

Nowadays the batteries of most communication terminal products like mobile phones are detachable, and waterproofing for the battery part of a mobile phone with an IPX7 (referring to the international waterproof grade 7, that is, referring to that a device in the power-on state does not dysfunction when it is placed at one meter underwater for half an hour) waterproof function is implemented through silica gel interference. At present, with the popularization of smartphones, the thickness of the phone is required to be thinner and thinner, and the capacity and volume of the battery get larger and larger, and meanwhile it requires the IPX7 waterproof function and that screws are not exposed so as to avoid affecting the appearance molding, but much structure space is occupied if the waterproof mode of silica gel interference is used, which is not appropriate for protecting the battery part any more.

In view of this demand situation, a new design method for protecting an inbuilt battery must be found.

### Summary of the Invention

The embodiments of the present invention provide a battery shell assembly for an electronic device, a plastic and metal assembly and a plastic part, to solve the problem that the existing battery shell assembly for the electronic device occupies much space.

The embodiment of the present invention provides a battery shell assembly for an electronic device, which comprises a plastic part, a metal part and a thin film, wherein:
the plastic part has a window and a first combination portion;
the metal part comprises a sheet portion covering the window and a second combination portion matching with the first combination portion, and an accommodation space used for accommodating a battery of the electronic device is formed after the plastic part is combined with the metal part; and
the thin film adheres to and covers a juncture of the plastic part and the metal part exposed relative to the accommodation space.

Alternatively, the first combination portion and the second combination portion are combined through injection molding or assembling.

Alternatively, the second combination portion comprises one or a plurality of the following structures: a flange, a convex plate and a flanged hole.

Alternatively, the first combination portion is a protuberance, and the second combination portion is a bending portion with a pinhole matching with the protuberance.

Alternatively, a first exposed surface of the plastic part at the juncture is aligned with a second exposed surface of the metal part at the juncture, and the first exposed surface is connected with the second exposed surface.

The embodiment of the present invention further provides a plastic and metal assembly, which is characterized in that, the plastic and metal assembly is formed by injection molding of a mold in which a metal part is embedded and has an accommodation space used for accommodating a battery of an electronic device, and the plastic and metal assembly comprises a plastic part and a metal part; wherein:
the plastic part has a window and a first combination portion; and
the metal part comprises a sheet portion covering the window and a second combination portion matching with the first combination portion.

Alternatively, the second combination portion comprises flanges and/or flanged holes.

Alternatively, a first exposed surface of the plastic part at the juncture is aligned with a second exposed surface of the metal part at the juncture, and the first exposed surface is connected with the second exposed surface.

The embodiment of the present invention further provides a plastic part, which is characterized in that, the plastic part serves as a part of a battery shell assembly for an electronic device, and the plastic part comprises:
the plastic part is combined with a metal part to form an accommodation space used for accommodating a battery of the electronic device, the plastic part has a window and a first combination portion, the metal part comprises a sheet portion and a second combination portion, and the window is covered by the sheet portion, and the first combination portion is matched with the second combination portion.

Alternatively, the second combination portion comprises one or a plurality of the following structures: a flange, a convex plate, a flanged hole, or the second combination portion is a bending portion with a pinhole matching with a protuberance when the first combination portion is the protuberance.

Through the battery shell assembly for the electronic device, plastic and metal assembly and plastic part of the embodiments of the present invention, a new design method for protecting an inbuilt battery is provided, and the design method is a design scheme for one part of the structure of the electronic device. The unique attributes of the metal part are utilized in the scheme, which can reduce the space occupation, and enhance the shell strength to implement the fall protection for the battery.

### Brief Description of Drawings

FIG. 1 and FIG. 2 are schematic diagrams of an overall structure of a battery shell assembly for an electronic device from different angles according to the embodiment 1 of the present invention.
FIG. 3 is a schematic diagram of an overall structure of a metal part in the embodiment 1 of the present invention.
FIG. 4 is a schematic diagram of a section of a metal part in the embodiment 1 of the present invention.
FIG. 5 is a schematic diagram of a section after injection molding is performed on a plastic part and a metal part in the embodiment 1 of the present invention.
FIG. 6 is a schematic diagram of a juncture line after injection molding is performed on a plastic part and a metal part in the embodiment 1 of the present invention.
FIG. 7 is a schematic diagram of a thin film adhering to and covering a juncture line in the embodiment 1 of the present invention.
FIG. 8 is a schematic diagram of a section structure after a plastic part and a metal part are assembled in a battery shell assembly for an electronic device according to the embodiment 2 of the present invention.
FIG. 9 is a schematic diagram of a structure of a plastic part according to the embodiment of the present invention.
FIG. 10 and FIG. 11 are schematic diagrams of using a decorative sheet to cover the screws and thin film.

### Preferred Embodiments of the Invention

The technical scheme of the embodiments of the present invention will be described in detail in combination with the accompanying drawings below, so that the people skilled in the art can better understand the present invention and implement the present invention, but the illustrated embodiments are not a limitation to the present invention. It should be noted that the embodiments in the present invention and the characteristics in the embodiments can be combined with each other in the condition of no conflict.

### Embodiment 1

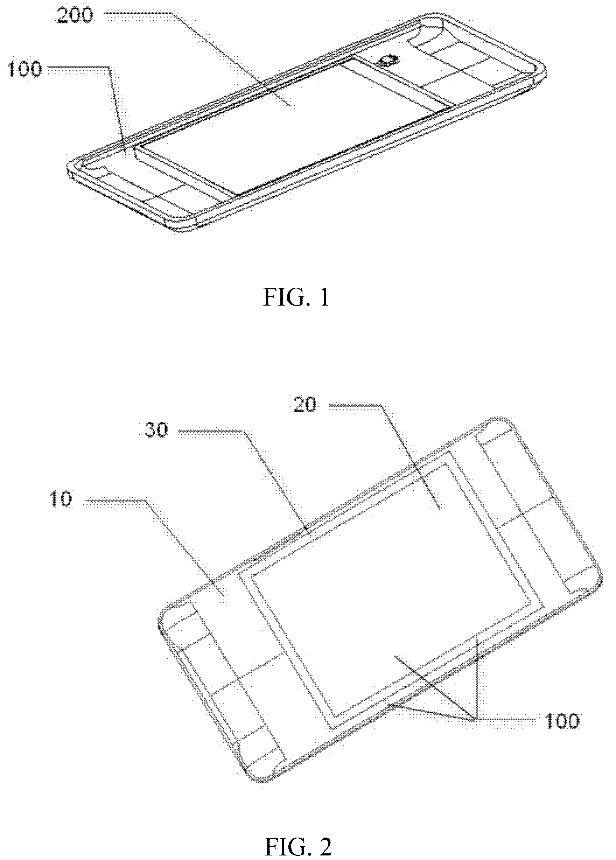

A battery shell assembly for an electronic device according to the embodiment of the present invention is as shown in FIG. 1, and an inbuilt battery 200 is placed within a battery shell assembly 100 for an electronic device, so as to avoid that the inbuilt battery 200 has a large displacement to cause the damage when it falls down.

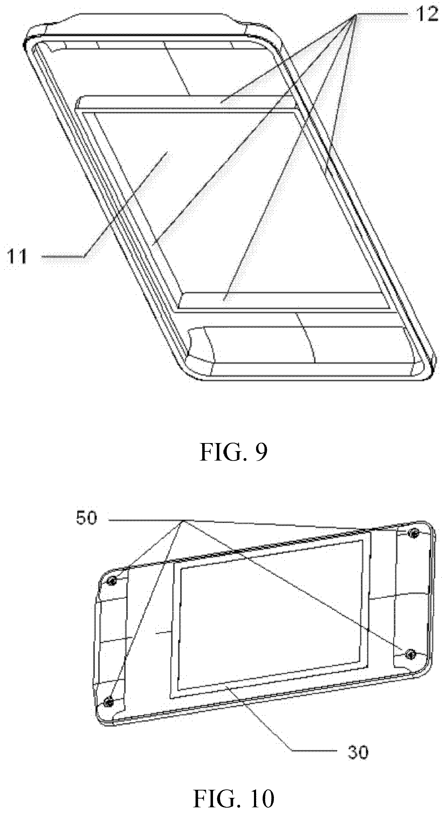

As shown in FIG. 2, the battery shell assembly 100 for the electronic device includes a plastic part 10, a metal part 20 and a thin film 30, wherein:
the plastic part 10 has a window 11 (as shown in FIG. 9) and a first combination portion 12 (not shown in the figure).

Understandably, the shape of the plastic part is not limited in the embodiment of the present invention, as long as an accommodation space used for accommodating the battery can be formed after the plastic part and the metal part are assembled or the injection molding is performed on the plastic part and the metal part.

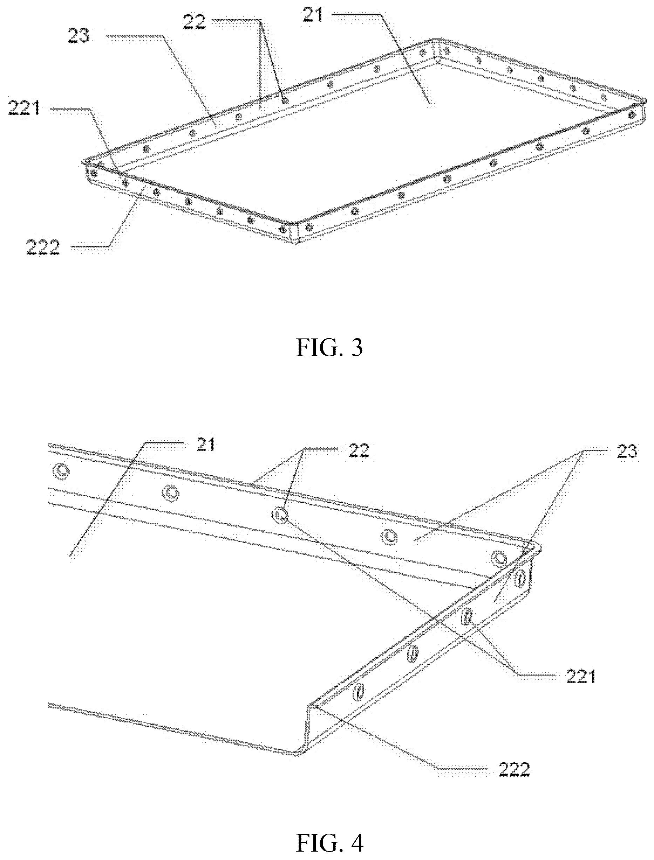

As shown in FIG. 3 and FIG. 4, the metal part 20 includes a sheet portion 21 covering the window 11 and a second combination portion 22 matching with the first combination portion 12, and an accommodation space used for accommodating the battery of the electronic device is formed after the plastic part 10 is combined with the metal part 20;
the thin film 30 covers a juncture of the plastic part 10 and the metal part 20 exposed relative to the accommodation space.

The first combination portion 12 and the second combination portion 22 are combined through injection molding or assembling.

The second combination portion 22 includes one or a plurality of the following structures: a flange, a convex plate and a flanged hole.

A first exposed surface 131 of the plastic part 10 at the juncture 13 is aligned with a second exposed surface 132 of the metal part 20 at the juncture 13, and the first exposed surface 131 is connected with the second exposed surface 132.

Understandably, the exposed surface mentioned in the embodiment of the present invention is relative to an internal surface of the accommodation space.

Alternatively, the second combination portion 22 includes two structures: a flange and a flanged hole.

FIG. 2 is a schematic diagram of molding the battery shell assembly for the electronic device by carrying out an plastic injection molding process on the mold in which steel sheet is embedded according to the embodiment of the present invention. The accommodation space used for accommodating the battery of the electronic device is formed after the plastic part 10 is combined with the metal part 20. The plastic part 10 uses Poly Carbonate (PC) or PC plus glass fiber or Polyphthalamide (PPA) plus glass fiber materials, and the PC plus glass fiber materials are preferably selected in overall consideration of the structure strength and appearance processing. The waterproof thin film 30 is pasted on the enclosure, and an IPX7 waterproof function is implemented through the effect of water resistance of the waterproof thin film 30.

The metal part 20 uses stainless steel with the thickness of 0.15mm or 0.2mm, to enhance the structure strength. In the application example, as shown in FIG. 3 and FIG. 4, the metal part 20 is made into a fully-enclosed side wall 23 generally vertical to the sheet portion 21 through a drawing process, and the side wall 23 is totally enclosed in the wrapping of plastics when the injection molding is performed within the mold. A large number of uniformly distributed flanged holes 221 are stamped on the side wall 23, and successive flanges 222 are also molded at the edge of the side wall 23. These flanged holes 221 and flanges 222 not only can enhance the structure strength of the steel sheet, but also can increase the bonding force between the steel sheet and the plastic.

In the application example, the flanged holes 221 and flanges 222 all belong to the second combination portion 22 of the metal part 20.

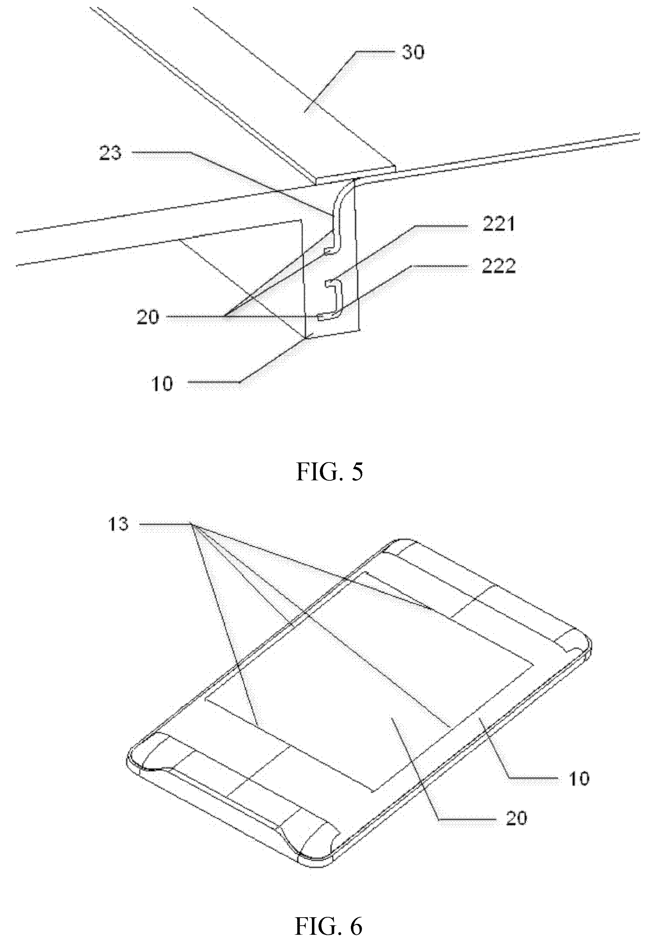

FIG. 5 is a schematic diagram of combining the metal part 20 and the plastic part 10 in the embodiment of the present invention. The flanged holes 221 stamped on the side wall 23 of the metal part 20 and the flanges 222 stamped on the side wall 23 are completely included within the plastic part 10, so that the side wall 23 surrounded successively is not exposed and is prevented from a soaked pathway.

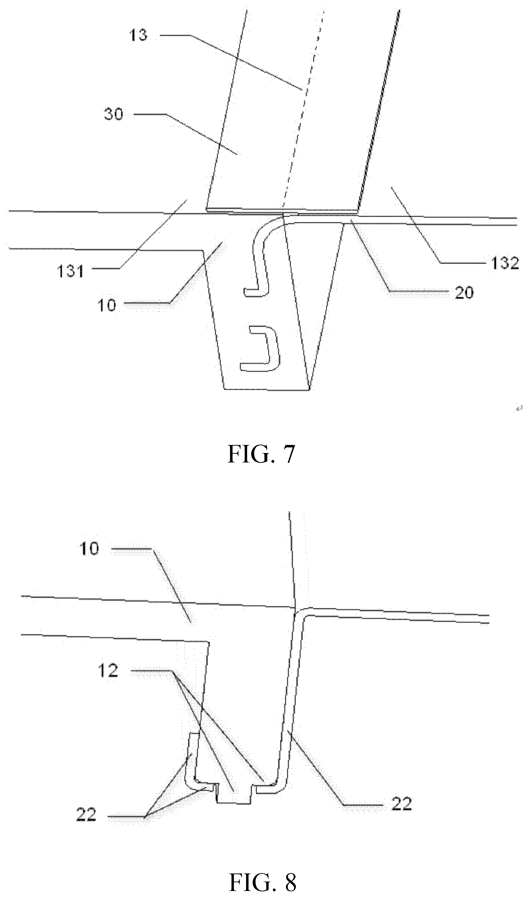

FIG. 6 and FIG. 7 are schematic diagrams of a design method for implementing an IPX7 waterproof structure through a waterproof thin film 30 in the embodiment of the present invention. The only pathway that can be soaked in the embodiment of the present invention is an appearance surface between the steel sheet and the plastic namely a juncture line 13 exposed relative to the accommodation space, or called as a juncture. One side of the juncture line 13 is the metal part 20, and the other side is the plastic part 10. The waterproof thin film 30 is pasted on the juncture line 13, and it is seamlessly laminated with the metal part 20 and the plastic part 10 respectively, by which the IPX7 waterproof function is implemented based on the waterproof gum of the waterproof membrane itself. The thin film 30 is not allowed to have poor appearances such as bubbles and damages and so on after the assembling is completed, and the bonding strength does not allow being easily stripped. The texture of the waterproof thin film 30 is a transparent or semitransparent or non-transparent Polyethylene Terephthalate (PET) film or PC film with the thickness of 0.05mm to 0.15mm.

### Embodiment 2

A battery shell assembly 100 for an electronic device of the embodiment of the present invention includes a plastic part 10, a metal part 20 and a thin film 30, wherein:
the plastic part 10 has a window 11 and a first combination portion 12;
the metal part 20 includes a sheet portion 21 covering the window 11 and a second combination portion 22 matching with the first combination portion 12, and an accommodation space used for accommodating a battery 200 of the electronic device is formed after the plastic part 10 is combined with the metal part 20; and
unlike the embodiment 1, as shown in FIG. 8, the first combination portion 12 is a protuberance, and the second combination portion 22 is a bending portion with a pinhole matching with the protuberance.

The thin film 30 covers a juncture of the plastic part 10 and the metal part 20 exposed relative to the accommodation space.

A first exposed surface 131 of the plastic part 10 at the juncture 13 is aligned with a second exposed surface 132 of the metal part 20 at the juncture 13, and the first exposed surface 131 is connected with the second exposed surface 132.

The thickness of the sheet portion of the metal part 20 is 0.15 to 0.4mm, and the thickness of the thin film 30 is 0.05 to 0.15mm.

The texture of the metal part 20 is stainless steel; the texture of the plastic part 10 is: PC, PC containing the glass fiber or PPA resin containing the glass fiber; and the texture of the thin film 30 is PET-type plastics or PC.

The thin film 30 coheres to and covers the juncture 13.

### Embodiment 3

The embodiment 3 provides a plastic and metal assembly, and as shown in FIG. 1 and FIG. 2, the plastic and metal assembly is formed by injection molding of a mold in which a metal part is embedded, and it has an accommodation space used for accommodating a battery of the electronic device, and it includes a plastic part 10 and a metal part 20;
the plastic part 10 has a window 11 and a first combination portion 12, as shown in FIG. 9;
as shown in FIG. 3 and FIG. 4, the metal part 20 includes a sheet portion 21 covering the window 11 and a second combination portion 22 matching with the first combination portion 12.

The second combination portion 22 includes flanges 222 and/or flanged holes 221.

A first exposed surface 131 of the plastic part 10 at the juncture 13 is aligned with a second exposed surface 132 of the metal part 20 at the juncture 13, and the first exposed surface 131 is connected with the second exposed surface 132.

### Embodiment 4

The embodiment 4 provides a plastic part, and the plastic part serves as a part of the battery shell assembly for the electronic device, the plastic part and a metal part are combined to form an accommodation space used for accommodating a battery of the electronic device, and as shown in FIG. 9, the plastic part has a window 11 and a first combination portion 12, the metal part includes a sheet portion and a second combination portion, and the window is covered by the sheet portion, and the first combination portion is matched with the second combination portion.

As mentioned above, the second combination portion includes at least one of the following structures: a flange, a convex plate and a flanged hole, or the second combination portion is a bending portion with a pinhole matching with the protuberance when the first combination portion is a protuberance.

The texture of the plastic part is: PC, PC containing the glass fiber or PPA resin containing the glass fiber; and the texture of the thin film is PET-type plastics or PC.

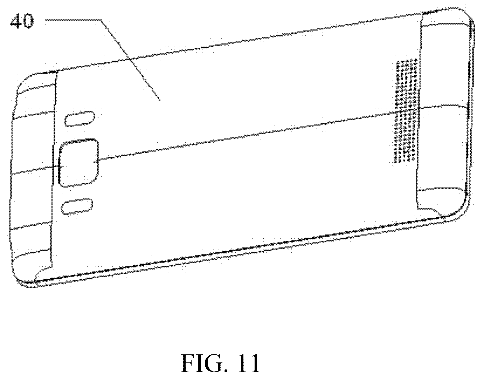

FIG. 10 and FIG. 11 are schematic diagrams of fixing a decorative sheet 40 on the enclosure with the aid of clips and gum to cover screws 50 of the mobile phone and a waterproof thin film 30 in the embodiment of the present invention. With the decorative sheet 40, not only the customization of various appearance effects can be implemented, but also the waterproof thin film 30 can be effectively protected to prevent from damage and losing the IPX7 waterproof function. By using an ultrathin decorative sheet, the appearance without screws and the reduction of thickness of the mobile phone can be achieved.

Through the battery shell assembly for the electronic device, plastic and metal assembly and plastic part of the embodiments of the present invention, a new design method for protecting an inbuilt battery is provided, and the design method is a design scheme for one part of the structure of the electronic device. The unique attributes of the metal part are utilized in the scheme, which can reduce the space occupation, and enhance the shell strength to implement the fall protection for the battery, and also implement the IPX7 waterproof function, and hide the screws of the mobile phone to avoid affecting the appearance and reduce the overall thickness of the mobile phone.

The above description is only the preferred embodiments of the present invention, and the protection scope of the present invention is not limited to this, changes or substitutions that can be easily conceived by any skilled familiar to the art within the technical scope disclosed by the present invention shall be all covered within the protection scope of the present invention. Therefore, the protection scope of the present invention should be subject to the protection scope of the claims.

### Industrial Applicability

With the technical scheme of the embodiments of the present invention, the space occupation can be reduced, and the shell strength can be enhanced to implement the fall protection for the battery.

## Claims

1. A battery shell assembly for an electronic device, comprising: a plastic part, a metal part and a thin film, wherein:
the plastic part has a window and a first combination portion;
the metal part comprises a sheet portion covering the window and a second combination portion matching with the first combination portion, and an accommodation space used for accommodating a battery of the electronic device is formed after the plastic part is combined with the metal part; and
the thin film adheres to and covers a juncture of the plastic part and the metal part exposed relative to the accommodation space.

2. The battery shell assembly for the electronic device according to claim 1, wherein: the first combination portion and the second combination portion are combined through injection molding or assembling.

3. The battery shell assembly for the electronic device according to claim 1 or 2, wherein: the second combination portion comprises one or a plurality of the following structures: a flange, a convex plate and a flanged hole.

4. The battery shell assembly for the electronic device according to claim 1 or 2, wherein: the first combination portion is a protuberance, and the second combination portion is a bending portion with a pinhole matching with the protuberance.

5. The battery shell assembly for the electronic device according to claim 1, wherein: a first exposed surface of the plastic part at the juncture is aligned with a second exposed surface of the metal part at the juncture, and the first exposed surface is connected with the second exposed surface.

6. A plastic and metal assembly, **characterized in that**, the plastic and metal assembly is formed by injection molding of a mold in which a metal part is embedded and has an accommodation space used for accommodating a battery of an electronic device, and the plastic and metal assembly comprises: a plastic part and a metal part; wherein:
the plastic part has a window and a first combination portion; and
the metal part comprises a sheet portion covering the window and a second combination portion matching with the first combination portion.

7. The plastic and metal assembly according to claim 6, wherein: the second combination portion comprises flanges and/or flanged holes.

8. The plastic and metal assembly according to claim 6, wherein: a first exposed surface of the plastic part at the juncture is aligned with a second exposed surface of the metal part at the juncture, and the first exposed surface is connected with the second exposed surface.

9. A plastic part, **characterized in that**, the plastic part serves as a part of a battery shell assembly for an electronic device, and the plastic part comprises:
the plastic part is combined with a metal part to form an accommodation space used for accommodating a battery of the electronic device, the plastic part has a window and a first combination portion, the metal part comprises a sheet portion and a second combination portion, and the window is covered by the sheet portion, and the first combination portion is matched with the second combination portion.

10. The plastic part according to claim 9, wherein: the second combination portion comprises one or a plurality of the following structures: a flange, a convex plate, a flanged hole, or the second combination portion is a bending portion with a pinhole matching with a protuberance when the first combination portion is the protuberance.
